(19) Europäisches Patentamt

European Patent Office

Office européen des brevets

(11) **EP 1 353 295 B1**

(12) **EUROPEAN PATENT SPECIFICATION**

(45) Date of publication and mention of the grant of the patent:
**22.08.2007 Bulletin 2007/34**

(51) Int Cl.:
*G06T 1/40* *(2006.01)*     *G06F 17/18* *(2006.01)*
*G06T 17/20* *(2006.01)*

(21) Application number: **00981389.0**

(22) Date of filing: **12.12.2000**

(86) International application number:
**PCT/ES2000/000466**

(87) International publication number:
**WO 2002/048962 (20.06.2002 Gazette 2002/25)**

(54) **NON-LINEAR DATA MAPPING AND DIMENSIONALITY REDUCTION SYSTEM**

NICHTLINEARES DATENABBILDUNGS- UND DIMENSIONALITÄTSREDUKTIONSSYSTEM

SYSTEME DE MAPPAGE NON LINEAIRE DE DONNEES ET REDUCTION DE LA DIMENSIONNALITE

(84) Designated Contracting States:
**AT BE CH CY DE DK ES FI FR GB GR IE IT LI LU MC NL PT SE TR**

(43) Date of publication of application:
**15.10.2003 Bulletin 2003/42**

(73) Proprietors:
• **CONSEJO SUPERIOR DE INVESTIGACIONES CIENTIFICAS**
**28006 Madrid (ES)**
• **The Key Foundation for Brain-Mind Research**
**8029 Zürich (CH)**

(72) Inventors:
• **PASCUAL-MARQUI, Roberto D.,**
**Found.Brain-Mind Res.**
**Lenggstr. 31, CH-8029 Zurich (CH)**
• **PASCUAL-MONTANO, Alberto D.,**
**C. Nac. Biotecnologia**
**28049 Madrid (ES)**
• **KOCHI, Kieko,**
**Key Found. Brain-Mind Res.**
**CH-8089 Zürich (CH)**

• **CARAZO GARCIA, Jose Maria,**
**C. Nac. Biotecnologia**
**28049 Madrid (ES)**

(74) Representative: **Gomez-Acebo, Ignacio**
**Jorge Juan, 19 - 3.o Dcha**
**28001 Madrid (ES)**

(56) References cited:
FR-A1- 2 754 080     US-A- 5 016 188
US-A- 5 930 781     US-A- 6 038 337

• **BARCENA, PASCUAL, MERELO & CARAZO:
'Application of the fuzzy kohonen clustering network to biological macromolecular images classification' INTERNATIONAL WORK-CONFERENCE ON ARTIFICIAL AND NATURAL NEURAL NETWORKS, IWANN'99, PROCEEDINGS vol. 2, 04 June 1999, ALICANTE SPAIN, pages 331 - 340, XP002955393**
• **BARCENA, PASCUAL, MERELO & CARAZO:
'Mapping and fuzzy classification of macromolecular images using self-organizing neural networks' ULTRAMICROSCOPY vol. 84, July 2000, pages 85 - 99, XP000994577**

Description

## OBJECT OF THE INVENTION

The present invention refers to a nonlinear data mapping and dimensionality reduction system providing essential novel features and significant advantages concerning the known means used for the same purposes in the current state of the art.

In particular, the present invention is based on a methodological plan for the construction and design of this type of neural network based on different criteria that can be precisely formulated through a mathematically rigorous cost function. Two specific examples will constitute the preferred embodiment of the present invention: one based on a particular modification of the classical Fuzzy c-means clustering algorithm and the other in the formulation of a new functional based on the probability density estimation of the input data. Both functionals include a term explicitly guaranteeing topological ordering on a low dimensional network.

The application field of the invention is related to the neural networks, particularly to the self-organizing neural networks as well as with the smooth data projection in a lower dimensional space. These types of networks are widely used in the fields of pattern recognition and artificial intelligence.

## BACKGROUND OF THE INVENTION:

Neural networks are very useful systems for classifying and recognizing patterns in very large data sets. One of the most widely used types of neural networks are the self-organizing maps (SOM), whose fundamental propellant was Teuvo Kohonen (Self-organized formation of topologically correct feature maps, Biol. Cybernet. 43 (1982) 59-69). This type of neural network tends to simulate the hypothetical self-organization process occurring in the human brain when it is presented with an external stimulus. SOM carries out a mapping (projection) of a set of input data onto a set of output vectors usually distributed in a regular low dimensional network (generally a two-dimensional grid), but this mapping has the peculiarity of being ordered according to the data input features, that is to say it aims to preserve the relative proximity of the input data in the output space.

The properties of the self-organizing maps make them powerful tools for data analysis in any engineering or science field, permitting processing, visualizing and clustering of large amounts of data. The topology preservation and dimensionality reduction properties make the SOM a necessary method in classifying entities where large numbers and classes of data appear, and where on many occasions, the transition of one class to the other is practically continuous, without a clear separation between them.

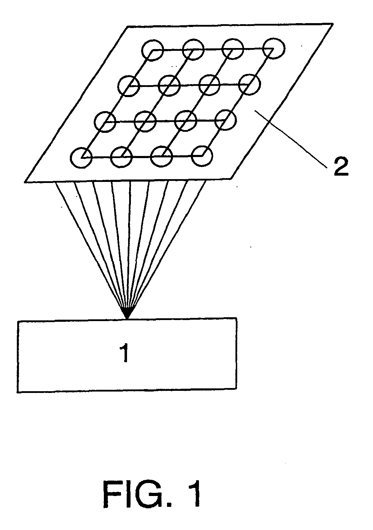

The structure of a SOM type neural network is shown in figure 1. Basically, it is composed of two layers: an input layer and an output layer. The input layer is composed of a set of neurons corresponding to each variable or component of the input vector and a set of interconnected output neurons so that it forms a regular grid. The structure of this grid (topology) is arbitrary, although a rectangular or hexagonal topology is generally used. Each neuron has an associated coefficient vector of the same dimension as that of the input data, and it is known as a code vector.

Mathematically, the Kohonen SOM algorithm can be described as follows:

Let $\mathbf{X}_i \in \Re^p$ , $i$=1.. $n$ denote a $p$ dimension data set and let $V_j \in \Re^p$ , $j$=1..$c$ denote a set of code vectors. The Kohonen update rule is the following:

$$\mathbf{V}_{j,t} = \mathbf{V}_{j,t-1} + \alpha_t h_{r,t} \left( \mathbf{X}_i - \mathbf{V}_{j,t-1} \right) \qquad (1)$$

where $\alpha_t$ represents the learning factor, which is defined as a decreasing function controlling the magnitude of the changes in each iteration $t$ and $h_{r,t}$ is a function controlling the size of the proximity of the nodes ($r$) to be updated during the training. Both $\alpha_t$ and $h_{r,t}$ decrease monotonically during training in order to achieve convergence.

The SOM functionality can briefly be described as follows: when an input data $\mathbf{X}_i$ is presented to the network, the neurons in the output layer compete with each other and the winning neuron $\mathbf{V}_j$, whose value is most like the input data, as well as a set of neighboring neurons, update their values. This process is repeated until a stop criteria is met, usually, when the neuron values are stabilized or when a determined number of iterations is reached.

The SOM method is rather simple in its description and practical implementation. However, despite its long history and widespread use, its theoretical properties are still not completely known. Basically, only the particular case of one dimensional input and output spaces has been fully worked out mathematically. Informally, it could be said that the SOM algorithm usually works very well, but it is not completely understood as to why.

The main attempts for the theoretical understanding of the SOM algorithm have been based on the solution to the following inverse problem: *"Find the functional (or cost function) whose numerical optimization corresponds to the SOM algorithm".* For example, several authors have proposed the SOM algorithm analysis in terms of a system of energy functionals in order to study and theoretically explain SOM. It has been shown that the SOM training mechanism is equivalent to minimizing a set of energy functionals subject to restrictions, thus explaining the ability of SOM to form topologically correct maps *(H. Ritter, K. Schulten, Kohonen's self-organizing maps: exploring their computational capabilities, Proc. IEEE Int. Joint Conf. On Neural Networks, San Diego, USA, 1988, pp. 109-116., V.V. Tolat, An analysis of Kohonen's self-organizing maps using a system of energy functionals, Biol. Cybernet. 64 (1990) 155-164., T. Kohonen, Self-organizing maps: optimization approaches, in: T. Kohonen, K. Mäkisara, J. Kangas, O. Simula (Eds.), Artificial Neural Networks, Vol. 2, pp. 981-990, North-Holland, Amsterdam, 1991., E. Erwin, K. Obermayer, K. Schulten, Self-organizing maps: ordering, convergence properties and energy functionals, Biol. Cybernet. 67 (1992) 47-55).* In spite of the huge effort of many authors in this sense, the general problem remains unsolved.

Due to the difficulties in finding a solid theoretical explanation to the Kohonen algorithm, some research groups have developed other procedures differing from SOM but based on the same idea of trying to map data from a high dimensionality space to another low dimensionality space, conserving the topological structure of the data. The methodology used for the development of these new algorithms is based on the optimization of well-defined cost functions, contrary to SOM. This approach permits a complete mathematical characterization of the mapping process. For example, Graepel et. al., proposed different cost functions, extending the work of Lutrell *(Graepel, M. Burger, K. Obermayer, Self-organizing maps: Generalizations and new optimization techniques, Neurocomputing 21 (1998) 173-190, S.P. Luttrell, A Bayesian analysis of self-organizing maps. Neural Computing 6 (1994) 767-794.):*

1. "The Soft Topographic vector quantization algorithm (STVQ)": It permits creating self-organizing maps by changing the proximity function, permitting encoding other desired proximity relationships between neurons.
2. "The Kernel-based soft topographic mapping (STMK)": It is a generalization of the previous method but it introduces new distance measures based on kernel functions.
3. "The Soft Topographic mapping for proximity data (STMP)": It permits generating maps based only on the data inter-distances.

These functionals are optimized with a combination of the EM (Expectation-Maximization) algorithm and Deterministic Annealing techniques.

Bishop et al. (C.M. Bishop, M. Svensén, C.K.I. Williams, Developments of the generative topographic mapping, Neurocomputing 21 (1998) 203-224) also proposed the GTM algorithm (Generative Topographic Mapping), which is a reformulation of SOM using a probabilistic cost function, based on a latent-variables model for the data, optimized by means of the EM algorithm

Although all these algorithms are rather more complex and costly in computing time than SOM, they have the advantage of offering a better control and understanding of the mapping process.

One of the most important properties of the SOM algorithm is that it permits clustering the input data in the output space. This is possible since the SOM algorithm, by trying to preserve the topology, carries out a smooth and ordered mapping, therefore, similar input data will be assigned to neighboring neurons during the mapping. In this way, the density and likeness of the neurons on the map will approximately reflect the input data density, permitting "visualizing" the data clustering structure. In this context, it is important to mention the different attempts existing to try to combine the clustering and mapping ideas:

Lampinen and Oja *(J. Lampinen, E. Oja, Clustering properties of hierarchical self-organizing maps, J. Math. Imaging and Vision 2 (1992) 261-272)* demonstrated that the SOM algorithm is in some way related to a clustering algorithm. Y. Cheng *(Y. Cheng, Convergence and ordering of Kohonen's batch map, Neural Computing 9 (1997) 1667-1676)* demonstrated that a modification of the original SOM algorithm (Batch Map) is a generalization of the well known k-means clustering algorithm and finally Chen-Kuo Tsao et al. *(E. Chen-Kuo Tsao, J.C. Bezdek, N.R. Pal, Fuzzy Kohonen clustering networks, Pattern Recognition 27 (5) (1994) 757-764)* integrated some aspects of the classical Fuzzy c-means clustering algorithm into the SOM algorithm.

The object of many patents has been the attempt to find new mapping, clustering or dimensionality reduction methods, as well as modifying the original Kohonen algorithm or combining several algorithms to obtain self-organizing maps with different properties and theoretical bases. In spite of not finding a direct relationship with the proposed invention in these methods, it is important to mention them for the broad interest they have generated in these fields. To mention several examples, we could indicate:

1. US-Patent 5734796 (31/3/98), for: Self-Organization of Pattern data with dimension reduction through learning of non-linear variance-constrained mapping.

2. WO 99/57686 (11/11/99), for: System, method, and computer program product for representing proximity data in a multi-dimensional space.

3. US-Patent 5303330 (12/4/94), for: Hybrid multilayer Neural Networks.

4. US-Patent 5729662 (17/3/98), for: Neural Network for classification of patterns with improved method and apparatus for ordering vectors.

5. US-Patent 5384895 (24/1/95), for: Self-Organizing Neural Network for classifying pattern signatures with "a posteriori" conditional class probability.

6. WO 99/31624 (24/6/99), for: Visualization and Self-Organization of Multidimensional Data Through Equalized Orthogonal Mapping.

7. US-Patent 5933818 (3/8/99), for: Autonomous knowledge discovery system and method.

8. US-Patent 5479576 (26/12/95), for: Neural Network Learning System Inferring an Input-Output Relationship From a Set of Given Input and Output Samples.

9. US-Patent 5276772 (4/1/94), for: Real Time Adaptive Probabilistic Neural Network System and Method for Data Sorting.

## BRIEF DESCRIPTION OF THE INVENTION:

The object of the proposed invention as claimed consists of proposing a methodology for constructing new self-organizing maps, similar to SOM, but based on mathematically well-defined cost functions, and explicitly expressing the two main desired features of a self-organizing map, namely quantifying the input space and smooth, ordered and topologically correct mapping. The proposed system consists of modified versions of the well-known Fuzzy c-means clustering algorithm functional, where the cluster centers or code vectors are distributed in a low dimensional space (such as a regular grid for example), for which a penalization term is added to the functional with the object of guaranteeing a smooth distribution of the code vector values on the low dimensional grid.

More specifically, the invention has a system for organizing multi-dimensional data in a smaller representation through a new self-organizing neural network. The neural network is composed of two layers: an input layer and an output layer. The input data are received by the input layer and a training algorithm produces an ordered mapping of this data in the output layer. The algorithm is derived from a cost function explaining the two main features of the network: correct quantification of the input space and formation of a topologically ordered map.

An object of the present invention is to have a new type of self-organizing neural network oriented to mapping, clustering and classifying high-dimensional data.

Another object of the present invention is also to provide a methodology for constructing this type of neural network based on different criteria that can be rigorously formulated in mathematically correct cost functions.

Other advantages and benefits of the invention will be explained in an evident manner in the rest of the present document.

## BRIEF DESCRIPTION OF THE DRAWINGS:

The detailed description of the present invention will be carried out hereinafter with the aid of the attached drawings, wherein:

Figure 1 shows the structure of the self-organizing Kohonen map, in which the neurons in the output layer are interconnected on a low dimensional space, such as a grid for example, it being possible for this grid to have any topology, such as rectangular, hexagonal and others;

Figure 2 shows a flow chart of the *Fuzzy c-means* clustering algorithm;

Figure 3 shows a two-dimensional grid of 3x3 ($c$ = 9) code vectors;

Figure 4 shows a flow chart of the FuzzySOM *(Fuzzy Self-Organizing Map)* algorithm;

Figure 5 shows (a) a set of 855 data items in 2D sampled from a triangle, and (b) the items projected onto a 1D layout using a 64 neuron FuzzySOM;

Figure 6 shows (a) 111 data items in 2D sampled from three circular groups, the data being projected onto a FuzzySOM 10x10 square grid, different projections for different values of the smoothness parameter $\vartheta$ being shown in (b), (c), and (d);

Figure 7 shows (a) 93 data items in 3D obtained as samples from three orthogonal segments, and (b) a 15x15 map where the data has been projected using FuzzySOM;

Figure 8 shows the FuzzySOM mapping of the classical Iris data onto a 10x15 map (three different species, 50 samples per species, 4 variables);

Figure 9 shows a flow chart of the Kernel c-means algorithm;

Figure 10 shows a flow chart of the KerDenSOM algorithm;

Figure 11 shows the KerDenSOM algorithm Mapping of a set of 2458 rotational power spectra of individual images of the G40P hexameric helicase from *B. Subtilis* bacteriophage SPP1, and

Figure 12 shows the KerDenSOM algorithm Mapping of a 338 set of images of the G40P hexameric helicase from *B. Subtilis* bacteriophage SPP1.

## PREFERRED EMBODIMENT OF THE INVENTION

As mentioned, the detailed description of the preferred embodiment of the invention will be carried out with reference to the attached drawings, in which figure 1 shows a scheme of the Kohonen self-organizing map formed by two layers: an input layer (1) with $p$ neurons, each one of them representing the $p$ variables of the $p$-dimensional input data and an output layer (2) formed by $c$ neurons interconnected in such a way that they form a regular grid. The grid (2) can be of any dimension, however, two-dimensional grids are used the most, as one of the main objectives of SOM is to reduce the dimensionality to a lesser space where the visualization can be direct. For the purpose of illustrating the present invention, we will assume in this preferred embodiment that the output grid (2) will always be 2 dimensional, unless otherwise indicated. The architecture of the neural networks proposed by the present invention is identical to the architecture of the SOMs.

Self-organizing maps must satisfy two fundamental requirements during the training process: self-organization and the convergence of the neuron values to a state where the data in the input space is faithfully quantified. We will use these two ideas to construct the new cost functions object of the invention.

One way of faithfully quantifying the data-space is to find a partition of the data into a finite number of groups, each one with a representative or center of the group, such that within one group, the distance from the data to its representative is as small as possible, and the distance between centers or representatives of different groups is as large as possible. There are algorithms for carrying out this type of partition and they are known as clustering algorithms. One of the most widely used algorithms for this type of task is known as Fuzzy c-means *(J.C. Bezdek, Pattern Recognition with Fuzzy Objective Function Algorithms. Plenum, New York, 1981).*

The Fuzzy c-means clustering method is a process of clustering objects in the same class or group, but the manner of carrying out this clustering is fuzzy, which means that the objects or data are not exclusively assigned to a single class, but rather partially assigned to all classes with a different degree of membership. The objective is to reach a high intra-cluster similarity and a low inter-cluster similarity. The theoretical bases of this method are the following:

Let $\mathbf{X}_i \in \Re^p$ , $i$=1..$n$ denote a $p$ dimensional data set, and let $V_j \in \Re^p$ , $j$=1..$c$, $(1<c<n)$ denote a set of cluster centers or prototypes. A $c$-partition of $X$ can be represented by $U_{ji}$, which is a continuous function in the [0,1] interval and represents the membership of $X_i$ to the $j$ group. In general, the $U_{ji}$ elements satisfy the following restrictions:

$$\begin{cases} 0 \le U_{ji} \le 1 \\ \sum_{j=1}^{c} U_{ji} = 1 \, , \, \forall i \end{cases} \qquad (2)$$

The problem to solve is proposed in the following manner:

$$\min_{\mathbf{U},\mathbf{V}} \; \sum_{i=1}^{n} \sum_{j=1}^{c} U_{ji}^{m} \left\| \mathbf{X}_i - \mathbf{V}_j \right\|^2 \qquad (3)$$

*for m>1, under the constraints in equation 2 and* where the $m$ parameter controls the amount of "fuzziness", and is termed the "fuzziness parameter".

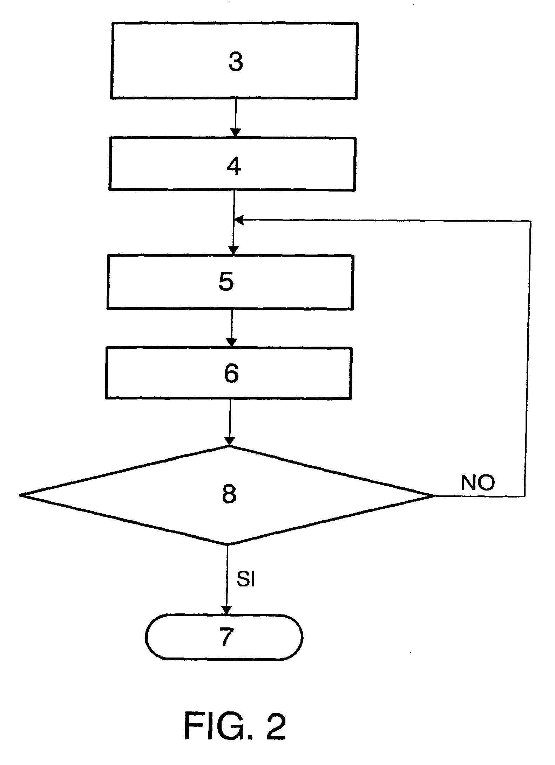

The algorithm shown in figure 2, representing the flow chart of the Fuzzy c-means clustering algorithm, is able to find a solution that converges to a local minimum of the functional in equation 3, by means of:

1. Randomly initializing (3) $V$ and randomly initializing $U$, but satisfying the restrictions given in equation 2;
2. Setting (4) a value for $m$>1. ,
3. For $i$=1...$n$, and for $j$=1...$c$, computing (5) :

$$U_{ji} = \frac{1}{\displaystyle\sum_{k=1}^{c} \frac{\left\| \mathbf{X}_i - \mathbf{V}_j \right\|^{2/(m-1)}}{\left\| \mathbf{X}_i - \mathbf{V}_k \right\|^{2/(m-1)}}} \qquad (4)$$

4. For $j=1...c$, computing (6):

$$\mathbf{V}_j = \frac{\displaystyle\sum_{i=1}^{n} U_{ji}^m \mathbf{X}_i}{\displaystyle\sum_{i=1}^{n} U_{ji}^m} \qquad (5)$$

5. Stopping (7) when the difference (8) in the $U_{ji}$'s between the current and the previous iteration are smaller than a given $\in$ value; otherwise go to the previous step 3.

To demonstrate that the algorithm provided solves the problem defined in equation 3, we should first take the derivative of equation 3 with respect to $\mathbf{V}_j$ and set it to 0. This produces exactly equation 4. The next step is to take the derivative of equation 3 with respect to $U$, under the restrictions proposed in equation 2. This produces exactly equation 5.

The next necessary step in order to obtain a correct self-organizing map consists of adding a penalization term to the Fuzzy c-means functional, guaranteeing the smoothness of the spatial distribution of the code vectors on the grid. Intuitively, the "smoothness" is necessary here to assure an ordered map. In other words, a proximity relationship is added to the cluster centers.

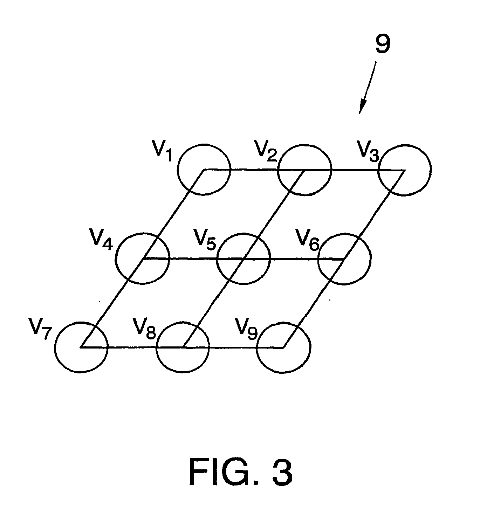

Let's assume that the cluster center or code vectors are distributed on a regular two-dimensional square grid (9) of 3x3 code vectors like the one shown in figure 3. Other topologies are also possible, such as a regular grid in 3D, a hexagonal, circular grid, etc. One possible smoothness implementation consists of demanding that the values of a code vector are similar or close to the average value of its nearest neighbors on the grid. Referring to figure 3, this means that the following "non-smoothness" measure of must be kept small:

$$tr\left(\mathbf{V}\mathbf{C}\mathbf{V}^T\right) = \left\{ \begin{array}{l} \left\| \mathbf{V}_1 - (\mathbf{V}_2 + \mathbf{V}_4)/2 \right\|^2 + \left\| \mathbf{V}_2 - (\mathbf{V}_1 + \mathbf{V}_3 + \mathbf{V}_5)/3 \right\|^2 + \left\| \mathbf{V}_3 - (\mathbf{V}_2 + \mathbf{V}_6)/2 \right\|^2 \\ + \left\| \mathbf{V}_4 - (\mathbf{V}_1 + \mathbf{V}_5 + \mathbf{V}_7)/3 \right\|^2 + \left\| \mathbf{V}_5 - (\mathbf{V}_2 + \mathbf{V}_4 + \mathbf{V}_6 + \mathbf{V}_8)/4 \right\|^2 + \left\| \mathbf{V}_6 - (\mathbf{V}_3 + \mathbf{V}_5 + \mathbf{V}_9)/3 \right\|^2 \\ + \left\| \mathbf{V}_7 - (\mathbf{V}_4 + \mathbf{V}_8)/2 \right\|^2 + \left\| \mathbf{V}_8 - (\mathbf{V}_5 + \mathbf{V}_7 + \mathbf{V}_9)/3 \right\|^2 + \left\| \mathbf{V}_9 - (\mathbf{V}_6 + \mathbf{V}_8)/2 \right\|^2 \end{array} \right\} \quad (6)$$

Where $\|\bullet\|^2$ denotes the squared Euclidean $L_2$ vector norm. The expression on the left-hand side of the equation constitutes a convenient way to state general non-smoothness, through matrix algebra, where $tr(\bullet)$ denotes the trace of a squared matrix, the superscript "$T$" denotes vector or matrix transpose and $\mathbf{V} \in \Re^{p \times c}$ and $\mathbf{C} \in \Re^{c \times c}$ implements a discrete differential operator (explained below).

In general terms, non-smoothness can be expressed in terms of the collection of vectors

$$\mathbf{W} = \begin{pmatrix} \mathbf{W}_1 & \mathbf{W}_2 & ... & \mathbf{W}_9 \end{pmatrix} \in \Re^{p \bullet 9}$$, with $\mathbf{W}_1 = \mathbf{V}_1 - (\mathbf{V}_2 + \mathbf{V}_4)/2$, $\mathbf{W}_2 = \mathbf{V}_2 - (\mathbf{V}_1 + \mathbf{V}_3 + \mathbf{V}_5)/3$, and so on. In matrix notation, this is equivalent to:

$$\mathbf{W} = \mathbf{V}\mathbf{B} \qquad (7)$$

where, $\mathbf{V} = \begin{pmatrix} \mathbf{V}_1 & \mathbf{V}_2 & ... & \mathbf{V}_9 \end{pmatrix} \in \Re^{p \bullet 9}$, $\mathbf{B} \in \Re^{9 \bullet 9}$, and:

$$\mathbf{B}_{ij} = \begin{cases} 1 \,, if \; \left| \mathbf{r}_i - \mathbf{r}_j \right| = 0 \\ -1 \Big/ \sum_{j=1}^{c} I\left( \left| \mathbf{r}_i - \mathbf{r}_j \right| = 1 \right) \end{cases} \tag{8}$$

In equation 8, $\mathbf{r}_i$ denotes the position vector, in the grid space, to the ith grid point, and $I(\cdot)$ is the indicator function.

Finally, the scalar measure of non-smoothness given by equation 6 is simply the Frobenius norm of the matrix W defined by equations 7 and 8:

$$\left\| \mathbf{W} \right\|_F = tr\left( \mathbf{WW}^T \right) = tr\left( \mathbf{VBB}^T \mathbf{V}^T \right) = tr\left( \mathbf{VCV}^T \right) \tag{9}$$

where

$$\mathbf{C} = \mathbf{BB}^T \tag{10}$$

The matrix $\mathbf{B} \in \mathfrak{R}^{c \cdot c}$ implements (except for a scale factor) a discrete Laplacian operator. For instance, referring to figure 3 and equation 6, matrix **B** would be:

$$\mathbf{B} =$$

| 1 | -1/2 | 0 | -1/2 | 0 | 0 | 0 | 0 | 0 |
|---|---|---|---|---|---|---|---|---|
| -1/3 | 1 | -1/3 | 0 | -1/3 | 0 | 0 | 0 | 0 |
| 0 | -1/2 | 1 | 0 | 0 | -1/2 | 0 | 0 | 0 |
| -1/3 | 0 | 0 | 1 | -1/3 | 0 | -1/3 | 0 | 0 |
| 0 | -1/4 | 0 | -1/4 | 1 | -1/4 | 0 | -1/4 | 0 |
| 0 | 0 | -1/3 | 0 | -1/3 | 1 | 0 | 0 | -1/3 |
| 0 | 0 | 0 | -1/2 | 0 | 0 | 1 | -1/2 | 0 |
| 0 | 0 | 0 | 0 | -1/3 | 0 | -1/3 | 1 | -1/3 |
| 0 | 0 | 0 | 0 | 0 | -1/2 | 0 | -1/2 | 1 |

$$\tag{11}$$

It is important to emphasize that for the particular case in equation 6, 10 and 11 the matrices **B** and **C** implement the discrete Laplacian and the iterated second Laplacian, respectively, with certain boundary conditions. It is also possible to implement the proximity relationship through other matrices, always within the previously described context. For instance, the matrix **B** may be defined as a first order derivative (gradient) operator, and the matrix **D** would then be a Laplacian-like operator, similar to the one in equation 11.

Making use of the two ideas described above, vector quantization of the input space and smooth and ordered distribution of the code vectors associated to the neurons in the output space, reflected by means of equations 3 and 6, we formulate one of the functionals object of our invention:

$$\min_{\mathbf{U},\mathbf{V}} \left\{ \sum_{i=1}^{n} \sum_{j=1}^{c} U_{ji}^{m} \left\| \mathbf{X}_i - \mathbf{V}_j \right\|^2 \;+\; \vartheta tr\left( \mathbf{VCV}^T \right) \right\} \tag{12}$$

**Part A (faithfulness to the data)**    **Part B (topological ordering)**

where the first addend (or part A) refers to the faithfulness to the data, and the second addend (or part B) refers to the topological ordering.

This function is subject to the restrictions expressed in equation 2. $m > 1$ is the fuzziness parameter and $\vartheta > 0$ is the regularization parameter (smoothness) controlling the smoothness magnitude to demand.

Once we have a cost function formulated explicitly reflecting the features of the self-organizing map (Part A + Part B), the next step is to find suitable values for **V** and **U** minimizing it.

For fixed **V** and $\vartheta$, the problem of equation 12 regarding **U** is equivalent to the following problem using Lagrange multipliers ($\lambda_j$) :

$$\min_{U,\Lambda} \left\{ \sum_{i=1}^{n} \sum_{j=1}^{c} U_{ji}^{m} \left\| X_i - V_j \right\|^2 + \vartheta tr\left( VCV^T \right) + \sum_{i=1}^{n} \left[ \lambda_i \left( \sum_{j=1}^{c} U_{ji} - 1 \right) \right] \right\} \qquad (13)$$

The solution is given exactly by equation 4.

For fixed **U** and $\vartheta$, the problem of equation 12 regarding $V_j$, for j=1...c produces the following linear equations system:

$$V_j \sum_{i=1}^{n} U_{ji}^{m} + \vartheta \sum_{k=1}^{c} C_{jk} V_k = \sum_{i=1}^{n} U_{ji}^{m} X_i \qquad (14)$$

where $C_{jk}$ denote the elements of matrix C. Note that if $\vartheta=0$ and $2 \le c < n$, then equation 14 corresponds to the classical Fuzzy c-means solution given by equation 5.

Equation 14 can be re-written in the following manner:

$$V_j = \frac{\sum_{i=1}^{n} U_{ji}^{m} X_i - \vartheta \sum_{\substack{k=1 \\ k \ne j}}^{c} C_{jk} V_k}{\sum_{i=1}^{n} U_{ji}^{m} + \vartheta C_{jj}} \qquad (15)$$

for j=1...c. In this manner, the equation is in the convenient form for the Gauss-Seidel iterative algorithm where $C_{jk}$ denotes the elements of the previously explained **C** matrix. Note that if the regularization parameter $\vartheta$ is set to 0 (non-smoothness), the problem is converted into the classic Fuzzy c-means clustering problem.

Based on the topology of the grid shown in figure 3, one simple option for the **C** matrix is the Laplacian-like operator. In this case, equation 15 is simplified in the following manner:

$$V_j = \frac{\sum_{i=1}^{n} U_{ji}^{m} X_i + \vartheta \overline{V}_j}{\sum_{i=1}^{n} U_{ji}^{m} + \vartheta} \qquad (16)$$

where $\overline{V}_j$ denotes the average of the code vectors that are the nearest neighbors to $V_j$ on the grid. In this average value, $V_j$ is excluded. For example, referring to only some neurons of the map in figure 3, we would have:

$$\begin{cases} \overline{V}_1 = \left( V_2 + V_4 \right)/2 \\ \overline{V}_2 = \left( V_1 + V_3 + V_5 \right)/3 \\ \overline{V}_5 = \left( V_2 + V_4 + V_6 + V_8 \right)/4 \end{cases} \qquad (17)$$

Updating a code vector using equation 16 reveals the nature of the self-organizing process: a code vector is directly influenced by the most similar input data, and by its nearest neighbors on the grid.

The basic algorithm derived from this solution is similar to the Fuzzy c-means clustering algorithm (figure 2).

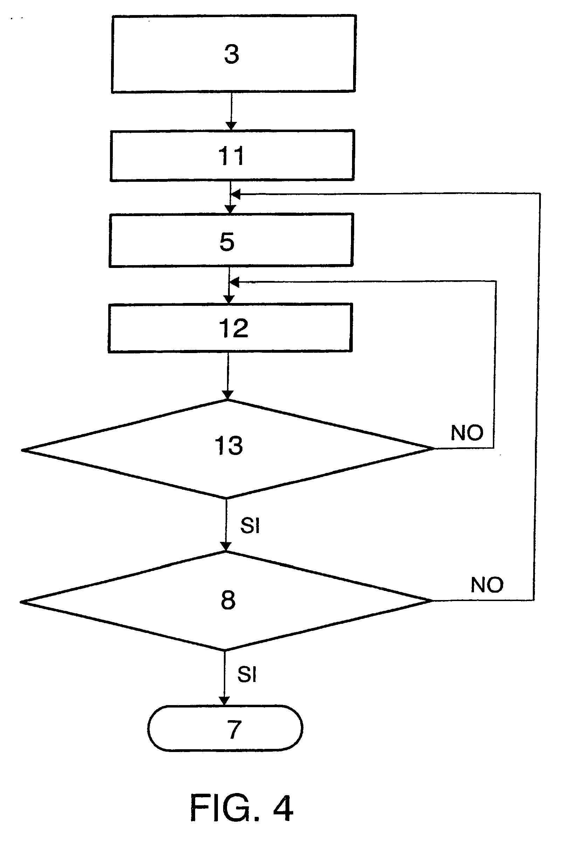

The solution will be iterative, alternating between equation 4 and equation 15. Figure 4 shows the flow chart of this algorithm which we have called FuzzySOM (Fuzzy Self-Organizing Map), consisting of:

a. randomly initializing (3) **V** and randomly initializing **U** as well, but satisfying the restrictions:

$$\begin{cases} 0 \le U_{ji} \le 1 \\ \sum_{j=1}^{c} U_{ji} = 1 \ , \ \forall i \end{cases} \qquad \text{equation 2}$$

b. setting (11) a value for $m$, with $m>1$, and a value for $\vartheta>0$,
c. computing (5) the **U**'s, for $i=1..n$ and for $j=1..c$, using equation 4:

$$U_{ji} = \frac{1}{\sum_{k=1}^{c} \frac{\|\mathbf{X}_i - \mathbf{V}_j\|^{2/(m-1)}}{\|\mathbf{X}_i - \mathbf{V}_k\|^{2/(m-1)}}}$$

d. for $j=1...c$, computing (12) the **V**'s using equation 15:

$$\mathbf{V}_j = \frac{\sum_{i=1}^{n} U_{ji}^m \mathbf{X}_i - \vartheta \sum_{\substack{k=1 \\ k \ne j}}^{c} \mathbf{C}_{jk} \mathbf{V}_k}{\sum_{i=1}^{n} U_{ji}^m + \vartheta \mathbf{C}_{jj}}$$

e. in case the condition (13) $\|V_{current} - V_{previous}\|^2 < \varepsilon$ is not satisfied, return to step d), if it is satisfied, but the condition (8) $\|U_{current} - U_{previous}\|^2 < \varepsilon$ is not satisfied, then the whole process is repeated starting at step c),
f. when both conditions are satisfied, the algorithm stops (7).

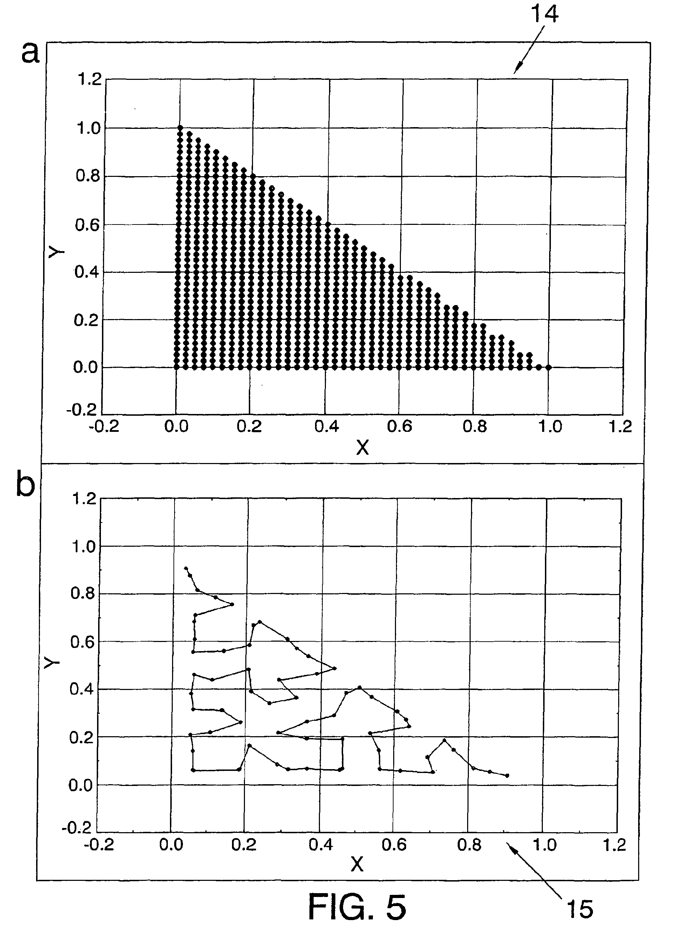

With the objective of achieving a convergence towards the global minimum of the function described in equation 12 and to minimize the effect produced by different initializations of $V$ and U, a strategy known as *deterministic annealing* can be introduced into the algorithm, it would basically start the algorithm with high values of the fuzziness parameter $m$ (high fuzziness) and make it gradually decrease to values very close to 1 (low fuzziness). In this manner, the results can considerably improve.
Some examples of the results of the described method will be described with the aid of figures 5, 6, 7 and 8. Figure 5 shows an interesting example of mapping a set (14) of 855 data items from a 2D triangle (figure 5a) onto 1D network (15) formed by 64 neurons. On said network (15), the code vectors tend to fill the triangle, producing the famous Peano curves *(*T. Kohonen, Self-organizing Maps, Springer Verlag, Berlin, 1995*)*. In this case, the parameters used were: $\vartheta=0.5$, with $m$ decreasing from 3 to 1.02 in 500 steps.

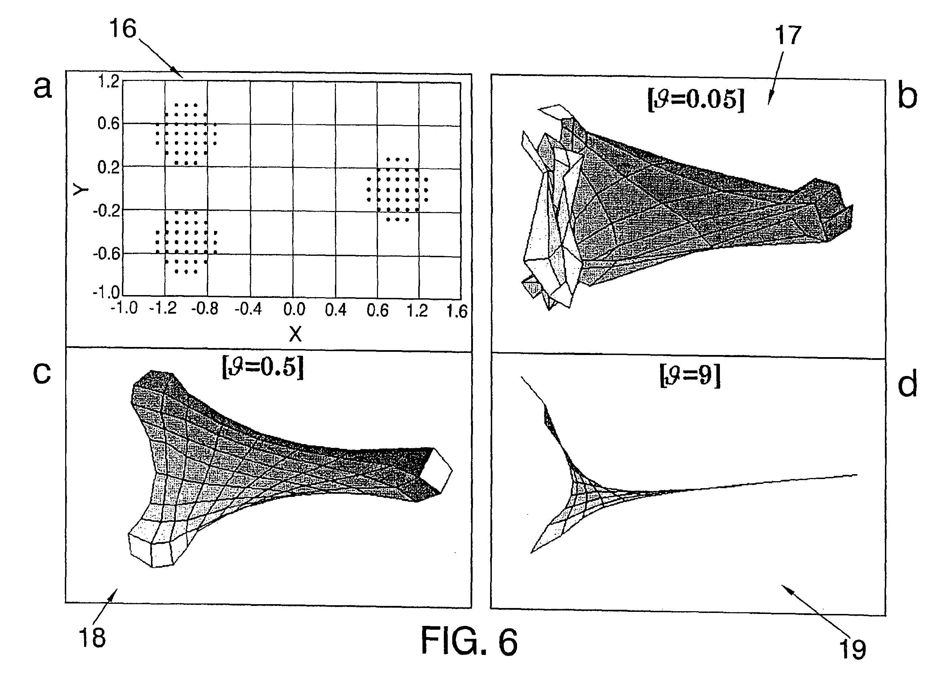

Figure 6 shows the effect of different values of the smoothness parameter $\vartheta$ on the new self-organizing map. In this simple example, the data input are a set (16) of 111 data items in 2D from a distribution of three circular clusters, as shown in figure 6a. The map used was a 10x10 square grid. On the map (17), with $\vartheta=0.05$, it can be seen that it is not very organized. The organization increases when the regularization parameter increases up to the point where a distortion starts to occur because of excessive regularization (map (19), with $\vartheta=9$) In all cases, $m$ was linearly decreased from 2 to 1.02 in 400 steps.

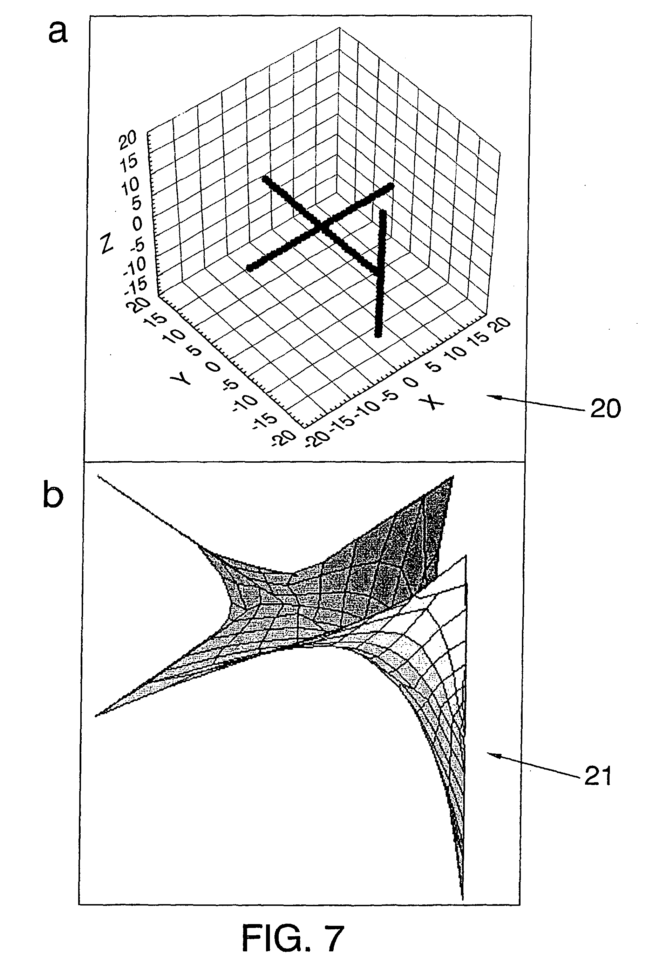

Figure 7 shows the mapping (20) of 93 data items in 3D, sampled from three orthogonal segments (figure 7a) on a 15x15 square grid. On the map (21) in figure 7b, the code vectors forming a smooth representation of the original data are shown. The parameters used were: $\vartheta=0.5$, with $m$ linearly decreasing from 2 to 1.02 in 500 steps. This example shows the mapping ability of the new method, which is able to conserve the main topological features of the data, in spite of the presence of a certain smoothing degree.

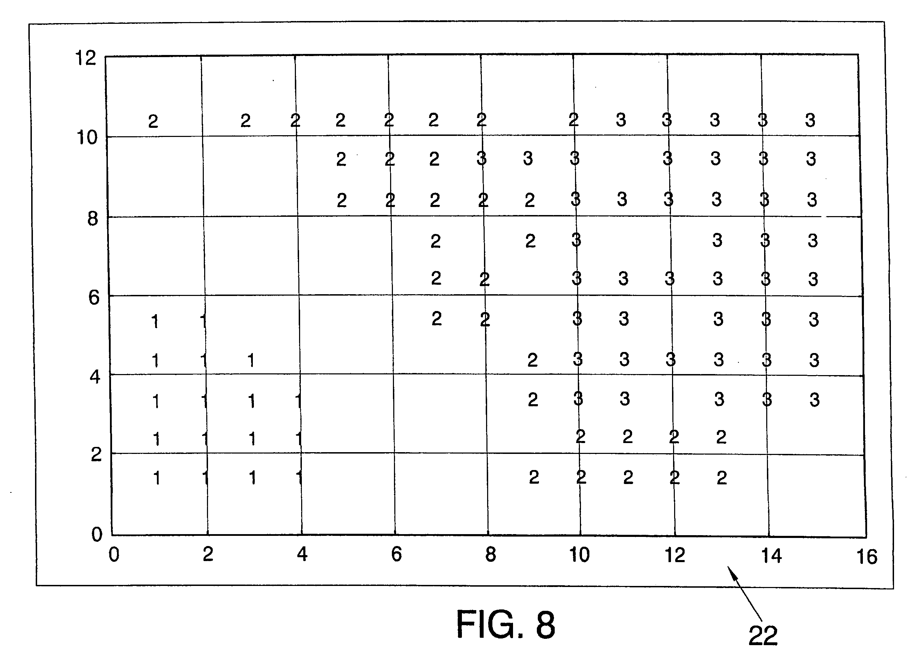

Figure 8 shows the projection (22) of the classic Iris data *(*R.A. Fisher, The use of multiple measurements in taxonomic problems, Ann. Eugen. 7 (1936) 179-188.*), composed of 150 data in 4D corresponding to three different flower species. This data has been widely used for a long time as evidence of grouping and classification methods. The mapping results on a 10x15 square grid ($\vartheta$=0.5, with *m* decreasing from 2 to 1.02 in 500 steps) show the clear separation of one of the species (indicated as 1), while the other 2 (2 and 3) are not clearly separable. These results are in perfect concordance with those obtained by the majority of the dimensionality reduction, mapping and clustering methods applied to this set of data.

It is also important to mention that one of the big advantages of this new method is that the input data membership to each one of the code vectors is optimally estimated based on a fuzzy method, and not a posteriori, as is done with the SOM method.

The proposed idea for creating self-organizing maps based on this type of cost functions could be extended to other modifications expressing new map features. Another object of our invention is the methodology for creating self-organizing maps based on the idea of the creation of functionals demanding faithfulness to the data and topological ordering (Part A + Part B of the functional). Different ideas could be used in addition to the one previously described. A new idea for the creation of this type of map and also forming part of the proposed invention is the following:

Given a set of data $\mathbf{X}_i \in \Re^{p\bullet 1}$, with *i*=1...*n*, of *p* dimension, find subrogated *c* data $\mathbf{V}_j \in \Re^{p\bullet 1}$, with *j*=1...*c*, such that the estimated density:

$$D(\mathbf{X}) = \frac{1}{c}\sum_{j=1}^{c} K(\mathbf{X} - \mathbf{V}_j; \alpha) \qquad (18)$$

most resembles the density of the original data. *D(K)* is the Kernel-type density probability estimator, *K* is a Kernel function and $\alpha$ is the kernel width controlling the estimated density smoothness (the only case of interest is for when *n* > c+2). An example of a widely used Kernel function is the Gaussian function:

$$K(\mathbf{X} - \mathbf{X}_i; \alpha) = \frac{1}{(2\pi\alpha)^{p/2}} \exp\left(-\frac{\|\mathbf{X} - \mathbf{X}_i\|^2}{2\alpha}\right) \qquad (19)$$

In general, let *D*(**X**;$\theta$) be the probability density for the random X variable, where $\theta$ are some unknown parameters. If $\mathbf{X}_i \in \Re^{p\bullet 1}$, *i*=1...*n* denotes the data items, then:

$$L = \prod_{i=1}^{n} D(\mathbf{X}_i; \theta) \qquad (20)$$

is the likelihood function, and the most common statistical estimator for $\theta$ is obtained by maximizing it. Note that in this case the code vectors and the Kernel width compose the parameter vector, i.e., $\theta = \{\{\mathbf{V}_j\}, \alpha\}$. Maximizing the likelihood function is equivalent to maximizing its logarithm, making the equations easier to handle, mathematically speaking:

$$\max l = \sum_{i=1}^{n} \ln(D(\mathbf{X}_i)) = \sum_{i=1}^{n} \ln\left(\frac{1}{c}\sum_{j=1}^{c} K(\mathbf{X}_i - \mathbf{V}_j; \alpha)\right) \qquad (21)$$

This new functional expressed in equation 21 can be solved in the same manner as the Fuzzy *c*-means functional was solved: taking the derivative from equation 21 and setting it to zero would give:

$$\sum_{i=1}^{n} \frac{K\left(\mathbf{X}_i - \mathbf{V}_j; \alpha\right)}{\sum_{k=1}^{c} K\left(\mathbf{X}_i - \mathbf{V}_k; \alpha\right)} \left[\mathbf{X}_i - \mathbf{V}_j\right] = \mathbf{0} \qquad (22)$$

which is equivalent to:

$$\mathbf{V}_j = \frac{\sum_{i=1}^{n} \mathbf{X}_i u_{ji}}{\sum_{i=1}^{n} u_{ji}} \qquad (23) \quad \text{with:} \; u_{ji} = \frac{K\left(\mathbf{X}_i - \mathbf{V}_j; \alpha\right)}{\sum_{k=1}^{c} K\left(\mathbf{X}_i - \mathbf{V}_k; \alpha\right)} \qquad (24)$$

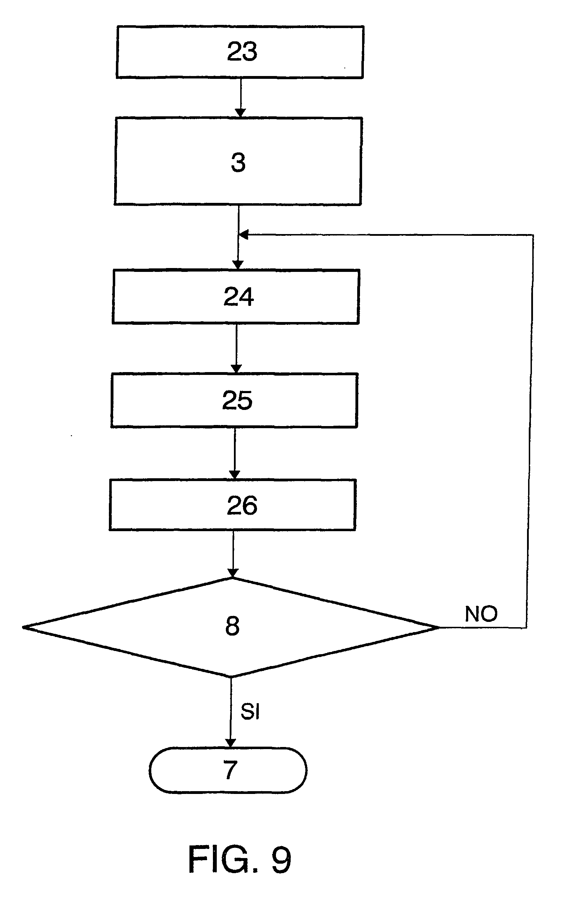

Equation 23 permits computing the *V's.* The equation 24 permits computing the **U**'s in relation to the flow chart shown in figure 9.

Similarly, the optimum Kernel width can also be estimated. In the case in which the kernel function is the Gaussian function (equation 19) and taking the derivative with respect to $\alpha$, and setting it to zero, gives:

$$\hat{\alpha} = \frac{1}{np} \sum_{i=1}^{n} \sum_{j=1}^{c} u_{ji} \left\| \mathbf{X}_i - \mathbf{V}_j \right\|^2 \qquad (25)$$

There is a great similarity between these equations and those that come from the Fuzzy c-means functional. The biggest difference is in equation 24 that updates the membership to the groups. Therefore, the new algorithm for estimating the probability density with subrogated data (given by equation 21) is almost the same as the Fuzzy c-means algorithm expressed in the flow chart in figure 2, but only changing equation 4 that updates the fuzzy membership for equation 24 and introducing the calculation of $\alpha$ from equation 25. Figure 9 shows the new flow chart of this new algorithm that we will call "Kernel c-means" consisting of:

a) Setting (23) a value for *c*, where (n>(c+2)),
b) Randomly initializing (3) **V** and randomly initializing **U**, but satisfying the restrictions given by equation 2;
c) For *j*=1...*c*, computing (24) the **V**'s according to equation 23:

$$\mathbf{V}_j = \frac{\sum_{i=1}^{n} \mathbf{X}_i u_{ji}}{\sum_{i=1}^{n} u_{ji}}$$

d) Computing (25) the $\alpha$'s using equation 25:

$$\hat{\alpha} = \frac{1}{np} \sum_{i=1}^{n} \sum_{j=1}^{c} u_{ji} \left\| \mathbf{X}_i - \mathbf{V}_j \right\|^2$$

e) For *i*=1...*n*, and for *j*=1...*c*, computing (26) the **U**'s according to equation 24:

$$u_{ji} = \frac{K\left(\mathbf{X}_i - \mathbf{V}_j; \alpha\right)}{\sum_{k=1}^{c} K\left(\mathbf{X}_i - \mathbf{V}_k; \alpha\right)}$$

f) Stopping (7) when the differences (8) of the $U_{ji}$'s between the current and previous iteration are less than a given value ε; otherwise, go to step c.

With the objective of creating a self-organizing map now based on the data probability density estimation, Part B from the FuzzySOM functional will be added to the new functional given by equation 21, the new cost function being:

$$\max l_s = \sum_{i=1}^{n} \ln\left(\frac{1}{c}\sum_{j=1}^{c} K\left(\mathbf{X}_i - \mathbf{V}_j; \alpha\right)\right) - \frac{\vartheta}{2\alpha}\, tr\left(\mathbf{VCV}^T\right) \qquad (26)$$

**Part A (faithfulness to the data)**   **Part B (topological ordering)**

With $\vartheta > 0$ being the smoothness parameter for the mapping and $\alpha$ being the Kernel width. Note the similarity between this new functional and the functional given by equation 12, where the two fundamental parts required to form the self-organizing map are conserved: faithfulness to the data (in this case given by the fact that the code vectors are estimated in such a way that they tend to have the same statistical properties of the input data by demanding that their estimated probability density functions must be as similar as possible) and the topological ordering on a grid of a smaller dimension.
If we use a Gaussian kernel given by equation 19, the functional would be equivalent to:

$$l_s = -\frac{np}{2}\ln 2c\pi\alpha + \sum_{i=1}^{n}\ln\left(\sum_{j=1}^{c}\exp\left(-\frac{\|\mathbf{X}_i - \mathbf{V}_j\|^2}{2\alpha}\right)\right) - \frac{\vartheta}{2\alpha}tr\left(\mathbf{VCV}^T\right) \qquad (27)$$

The first step would be to maximize the functional with respect to $\alpha$. Taking the partial derivative and setting it to zero, gives:

$$\hat{\alpha} = \frac{1}{np}\left(\sum_{i=1}^{n}\sum_{j=1}^{c}\|\mathbf{X}_i - \mathbf{V}_j\|^2 u_{ji} + \vartheta\sum_{j=1}^{c}\sum_{k=1}^{c}\mathbf{C}_{jk}\mathbf{V}_j^T\mathbf{V}_k\right) \qquad (28)$$

Taking the partial derivative of equation 27 with respect to $\mathbf{V_j}$, and setting it to zero gives:

$$\mathbf{V}_j = \frac{\sum_{i=1}^{n} u_{ji}\mathbf{X}_i - \vartheta\sum_{\substack{k=1 \\ k \neq j}}^{c}\mathbf{C}_{jk}\mathbf{V}_k}{\sum_{i=1}^{n} u_{ji} + \vartheta\mathbf{C}_{jj}} \qquad (29)$$

with $U_{ji}$ identical to equation 24.

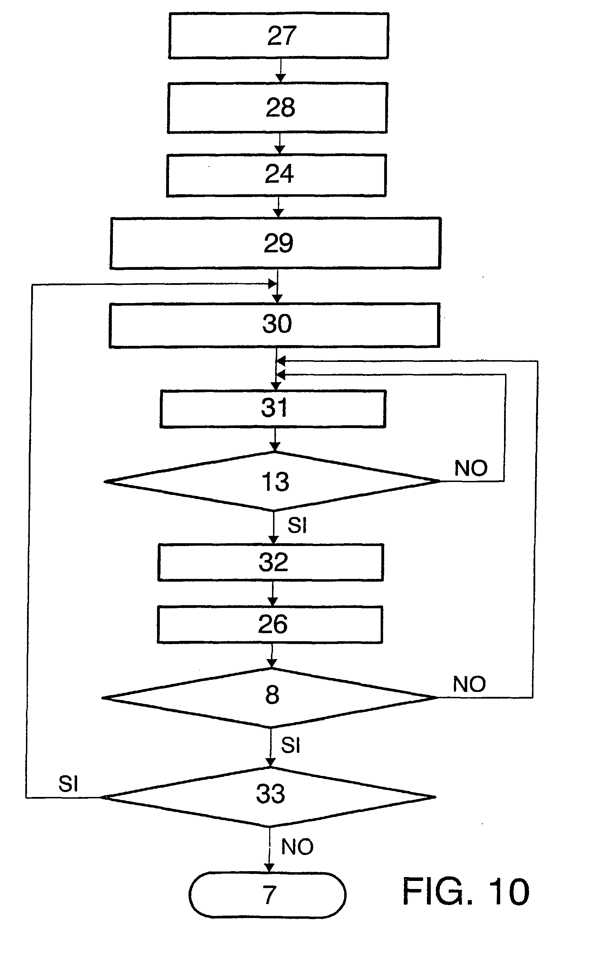

Figure 10 shows the flow chart of this new algorithm called KerDenSOM (standing for Kernel Density Estimator Self-Organizing Map), consisting of:

- Setting (27) the values $\vartheta_i > 0$ , $\vartheta_0 > 0$, the number of current iteration Iter=0, and the maximum number of iterations (MaxIter >1) ;
- Randomly initializing (28) **U**, but satisfying restrictions:

$$\begin{cases} 0 \le U_{ji} \le 1 \\ \sum_{j=1}^{c} U_{ji} = 1 \ , \ \forall i \end{cases} \qquad \text{equation 2}$$

- Initializing (24) the **V**'s by means of equation 23:

$$\mathbf{V}_j = \frac{\sum_{i=1}^{n} \mathbf{X}_i u_{ji}}{\sum_{i=1}^{n} u_{ji}}$$

- initializing (29) the $\alpha$

$$\hat{\alpha} = \frac{1}{np} \left( \sum_{i=1}^{n} \sum_{j=1}^{c} \|\mathbf{X}_i - \mathbf{V}_j\|^2 u_{ji} + \vartheta_1 \sum_{j=1}^{c} \sum_{k=1}^{c} \mathbf{C}_{jk} \mathbf{V}_j^T \mathbf{V}_k \right)$$

- computing (30) the iteration number Iter = Iter + 1, such that:

$$\vartheta = \exp\left( \ln(\vartheta_1) - \left( \ln(\vartheta_1) - \ln(\vartheta_0) \right) * Iter / MaxIter \right)$$

- for $j$=1,...$c$, computing (31) the **V**'s using equation 29:

$$\mathbf{V}_j = \frac{\sum_{i=1}^{n} u_{ji} \mathbf{X}_i - \vartheta \sum_{\substack{k=1 \\ k \ne j}}^{c} \mathbf{C}_{jk} \mathbf{V}_k}{\sum_{i=1}^{n} u_{ji} + \vartheta \mathbf{C}_{jj}}$$

- if the following condition (13) is not satisfied $\|V_{current} - V_{previous}\|^2 < \varepsilon$, then repeat the previous step (31), otherwise calculate (32) the $\alpha$ using equation 28:

$$\hat{\alpha} = \frac{1}{np} \left( \sum_{i=1}^{n} \sum_{j=1}^{c} \|\mathbf{X}_i - \mathbf{V}_j\|^2 u_{ji} + \vartheta \sum_{j=1}^{c} \sum_{k=1}^{c} \mathbf{C}_{jk} \mathbf{V}_j^T \mathbf{V}_k \right)$$

- calculate (26) the **U**'s , for $i$=1...$n$, and $j$=1...$c$, using equation 24:

$$u_{ji} = \frac{K\left(\mathbf{X}_i - \mathbf{V}_j; \alpha\right)}{\sum_{k=1}^{c} K\left(\mathbf{X}_i - \mathbf{V}_k; \alpha\right)}$$

- if the following condition (8) is not satisfied $\|U_{current} - U_{previous}\|^2 < \varepsilon$, return to step (31), otherwise check (33) if the iteration number is less than the maximum number assigned in the first step (27);
- if the previous condition (33) is satisfied, repeat the sequence from step (30), otherwise the KerDenSOM algorithm stops.

As can be seen in said chart, the algorithm starts with a large value of $\vartheta$, and once it has converged, $\vartheta$ is decreased, and the algorithm is repeated (*MaxIter* times). This step implements a *deterministic annealing* strategy to slowly decrease i$\vartheta$ until reaching the desired value. This technique permits considerably improving the results by helping equation 26 approach the global maximum.

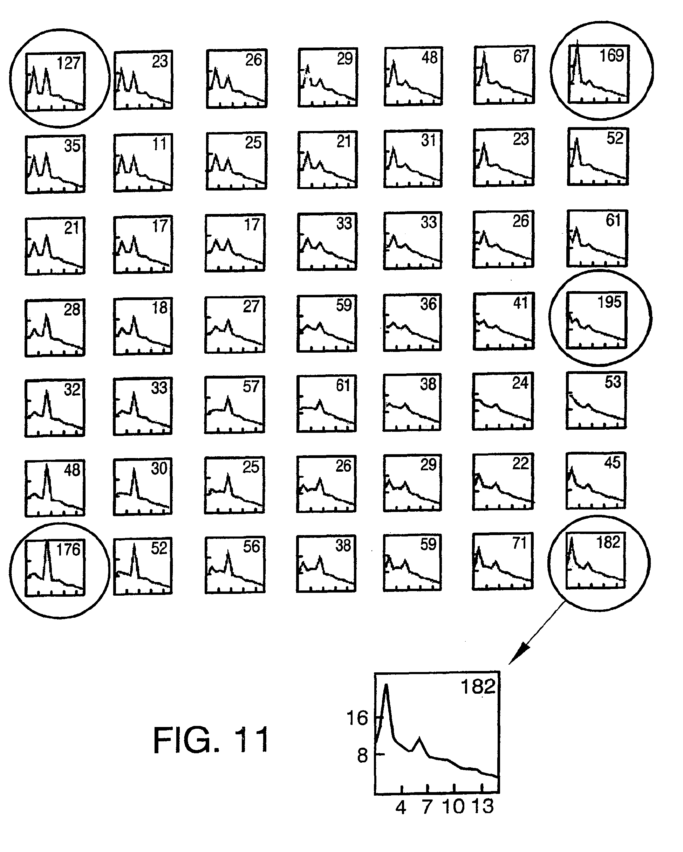

This new algorithm has been tested with the same synthetic data used for testing the FuzzySOM algorithm, and the results are almost identical (the reason for which the figures are not shown). In view of demonstrating that this method is able to solve real problems, we have tested it with two different data sets coming from a set of G40P hexameric helicase electron microscopy images from *B. Subtilis* bacteriophage SPP1. The details for these data can be seen in: (Pascual, A., Bárcena, M., Merelo, J.J., Carazo, J.M., "Mapping and Fuzzy Classification of Macromolecular Images using Self-Organizing Neural Networks". Ultramicroscopy, 2000 Jul; 84 (1-2): 85-99). Figure 11 shows the results of KerDenSOM on a set of 2458 rotational power spectra of the individual images of the previously mentioned specimen. The areas indicated with a circle show the code vectors having density maximums (number of spectra assigned to them). These maximums can be considered possible cluster representatives, that in this particular case correspond to images with 6-fold symmetry, 3-fold symmetry, 3-fold and 6-fold symmetry, 2-fold symmetry and 1-fold symmetry (no symmetry at all). These results coincide with others obtained and published by (M. Barcena, C. San Martin, F. Weise, S. Ayora, J.C. Alonso, J.M. Carazo, Polymorphic quaternary organization of the Bacillus subtilis bacteriophage SPP1 replicative helicase (G40P), J. Mol. Biol. 283 (4) (1988) 809-819.), using the Kohonen maps and clustering techniques. It is important to mention that when using the Kohonen method on a map of the same dimensions, the results are not as clear and evident as in the case shown here. The main difference is that since the method described in this invention explicitly tries to find a cluster of code vectors coming from the same probability density as the original data, we could assure that the neurons having maximum assigned densities would be representative candidates of a group or cluster, a conclusion that cannot be assured using the Kohonen method since it does not have an explicit function outlining the problem it tries to solve.

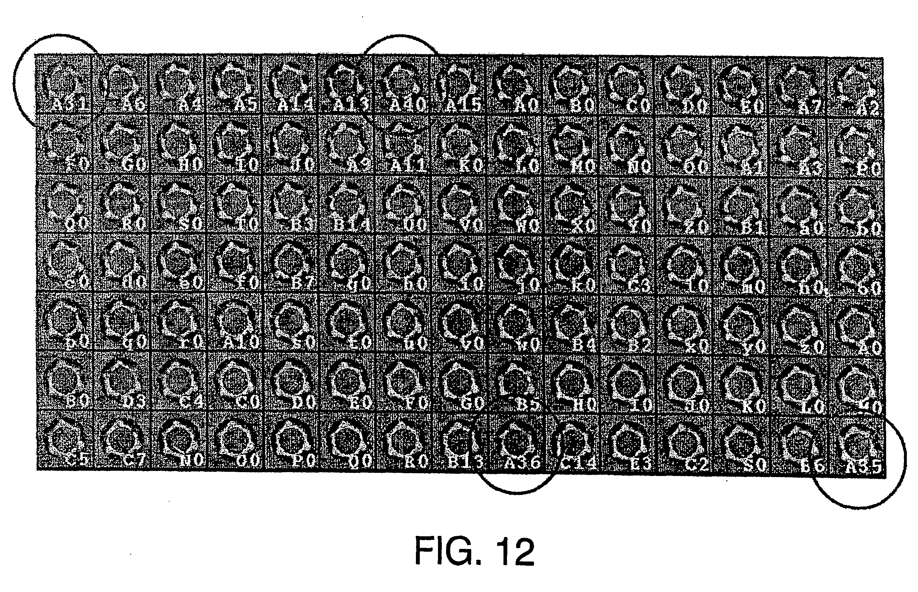

As a second example described above, 338 electron microscopy images of the same macromolecule were used, but that show an apparent homogeneity. The results of the mapping using the new proposed method (KerDenSOM) are shown in figure 12. The circled neurons show the areas of maximum density, that, as in the previous example, could represent well populated groups of truly homogenous images. In this particular case, 4 groups are seen representing two types of images of the same macromolecule but with a different orientation and a symmetry difference (see *Pascual et. al.* for details). These results coincide with those already recently obtained and published (*Bárcena et. al*).

It is also important to mention that one of the greatest advantages of this new methodology developed in this invention is that the probability can be explicitly estimated by means of equation 18, but the parameter estimation will be carried out by an algorithm training mechanism based on the new functional.

As the foregoing only corresponds to one preferred embodiment of the invention, skilled persons in the art will be able to introduce amendments and changes, also protected, without changing the scope of the invention defined in the following claims.

## Claims

1. A system for non-linear data mapping and dimensionality reduction comprised of:

   - a self-organizing neural network comprised of a plurality of layers of nodes including:

      - an input layer (1) composed of a plurality of input nodes corresponding to the variables of the input data and an output layer (2) composed of a plurality of interconnected output nodes forming a regular grid with an arbitrary topology;

- receiving means for multi-dimensional data input;
- means for generating an output signal for each node of the neural network output layer and in some way corresponding to received multi-dimensional input data; and
- training means for the neural network, including a mechanism to explicitly express two main features of the generated maps, namely faithfulness to the input data and topological ordering, **characterized in that** the training means is essentially based on a cost function formulating the requirements of a self-organizing map and including two parts:

> Part A: Faithfulness to the input data
> Part B: Topological ordering.

2. A system according to claim 1, **characterized in that** it proposes the following cost function:

$$\min_{\mathbf{U},\mathbf{V}} \left\{ \sum_{i=1}^{n}\sum_{j=1}^{c} U_{ji}^{m} \left\| \mathbf{X}_i - \mathbf{V}_j \right\|^2 \; + \; \vartheta tr\left( \mathbf{V}\mathbf{C}\mathbf{V}^T \right) \right\}$$

**Part A (faithfulness to the input data)**       **Part B (topological ordering)**

the first addend being Part A and the second addend being Part B, and whose optimization produces the FuzzySOM algorithm.

3. A system according to claim 2, **characterized in that** said FuzzySOM algorithm is composed of the following steps:

   a. randomly initializing **V** and also randomly initializing **U**, but satisfying the following restrictions:

$$\begin{cases} 0 \leq U_{ji} \leq 1 \\ \sum_{j=1}^{c} U_{ji} = 1 \; , \; \forall i \end{cases}$$

   b. setting a value for $m$, with $m>1$, and set a value for $\vartheta>0$,
   c. computing the **U**'s, for $i=1....n$ and for $j=1....c$, using the equation:

$$U_{ji} = \frac{1}{\displaystyle\sum_{k=1}^{c} \frac{\left\| \mathbf{X}_i - \mathbf{V}_j \right\|^{2/(m-1)}}{\left\| \mathbf{X}_i - \mathbf{V}_k \right\|^{2/(m-1)}}}$$

   d. for $j=1....c$, calculate the **V**'s using the equation:

$$\mathbf{V}_j = \frac{\displaystyle\sum_{i=1}^{n} U_{ji}^{m}\mathbf{X}_i - \vartheta\sum_{\substack{k=1 \\ k \neq j}}^{c} \mathbf{C}_{jk}\mathbf{V}_k}{\displaystyle\sum_{i=1}^{n} U_{ji}^{m} \; + \; \vartheta\mathbf{C}_{jj}}$$

   e. in case the following condition is not satisfied: $\| V_{current} - V_{previous} \|^2 < \varepsilon$, return to step d), otherwise if it is satisfied but the following condition $\| U_{current} - U_{previous} \|^2 < \varepsilon$ is not satisfied, then the whole process is repeated starting at step c),
f. when both conditions are satisfied, the algorithm stops.

**4.** A system according to claim 2, **characterized in that** it reflects the properties of a self-organizing map and where the regularization parameter $\vartheta$ controls the smoothness level being applied to the map, being converted into a pure clustering method known as Fuzzy c-means when the value of said parameter is set to zero.

**5.** A system according to claim 2, **characterized in that** it permits visualization in a lower dimensionality space as well as data clustering, each input data having a fuzzy membership associated to each one of the nodes of the output layer optimally estimated by means of the algorithm and not a posteriori as other related methods do it.

**6.** A system according to claim 2, **characterized in that** it permits using any distance measure to measure non-similarity in part A of the functional.

**7.** A system according to claim 1, **characterized in that** it permits formulating this other cost function:

$$\max l_s = \sum_{i=1}^{n} \ln\left(\frac{1}{c}\sum_{j=1}^{c} K\left(\mathbf{X}_i - \mathbf{V}_j; \alpha\right)\right) - \frac{\vartheta}{2\alpha}\ tr\left(\mathbf{VCV}^T\right)$$

Part A (faithfulness to the input data)        Part B (topological ordering)

where the faithfulness to the input data is based on the Kernel type probability density estimation of the input data and its optimization produces the KerDenSOM algorithm.

**8.** A system according to claim 7, **characterized in that** said used KerDenSOM algorithm consists of the following steps:

a. setting the values $\vartheta_1>0$, $\vartheta_0>0$, MaxIter>1, Iter=0,
b. randomly initializing U, satisfying the restrictions:

$$\begin{cases} 0 \le U_{ji} \le 1 \\ \sum_{j=1}^{c} U_{ji} = 1 \ , \ \forall i \end{cases}$$

c. initializing the **V**'s using the following equation:

$$\mathbf{V}_j = \frac{\sum_{i=1}^{n} \mathbf{X}_i u_{ji}}{\sum_{i=1}^{n} u_{ji}}$$

d. initializing the $\alpha$:

$$\hat{\alpha} = \frac{1}{np}\left(\sum_{i=1}^{n}\sum_{j=1}^{c}\left\|\mathbf{X}_i - \mathbf{V}_j\right\|^2 u_{ji} + \vartheta_1 \sum_{j=1}^{c}\sum_{k=1}^{c} \mathbf{C}_{jk}\mathbf{V}_j^T\mathbf{V}_k\right),$$

e. computing Iter = Iter + 1, such that:

$$\vartheta = \exp\!\left( \ln(\vartheta_1) - \left( \ln(\vartheta_1) - \ln(\vartheta_0) \right) * Iter/MaxIter \right)$$

f. for $j=1,...c,$ calculate the **V**'s using the equation:

$$V_j = \frac{\displaystyle\sum_{i=1}^{n} u_{ji}X_i - \vartheta \sum_{\substack{k=1 \\ k \neq j}}^{c} C_{jk}V_k}{\displaystyle\sum_{i=1}^{n} u_{ji} + \vartheta C_{jj}}$$

g. if $\|V_{current} - V_{previous}\|^2 < \varepsilon$ is not satisfied, then repeat the previous step, otherwise,

h. calculate the $\alpha$ using the following equation:

$$\hat{\alpha} = \frac{1}{np}\left( \sum_{i=1}^{n}\sum_{j=1}^{c} \|X_i - V_j\|^2 u_{ji} + \vartheta \sum_{j=1}^{c}\sum_{k=1}^{c} C_{jk}V_j^T V_k \right)$$

i. calculate the **U**'s, for $i=1...n$, and $j=1...c$, using the equation:

$$u_{ji} = \frac{K\left(X_i - V_j; \alpha\right)}{\displaystyle\sum_{k=1}^{c} K\left(X_i - V_k; \alpha\right)}$$

j. if the condition $\|U_{current} - U_{previous}\|^2 < \varepsilon....$ is not satisfied, return to step f, otherwise check if the iteration number is less than the maximum number assigned in the first step (a);

k. if the previous condition is satisfied, repeat the sequence from step e, otherwise the algorithm stops.

9. A system according to claim 7, **characterized in that** it reflects the properties of a self-organizing map and where the regularization parameter $\vartheta$ controls the smoothness level applied to the map, being converted into a new clustering method when the value of said parameter is set to zero.

10. A system according to claim 9, **characterized in that** it permits the exact Kernel width estimation used for the probability density estimation.

11. A system according to claim 9, **characterized in that** it permits using any Kernel function for the probability density estimation.

12. A system according to claim 9, **characterized in that** it not only permits producing a lower dimensional self-organizing map, but it also permits the direct calculation of the probability density.

13. A system according to claim 7, **characterized in that** it permits visualization in a lower dimensionality space as well data clustering.

14. A system according to claims 2 and 7, **characterized in that** it permits using any non-smoothness measure in part B of the functional, with the inclusion of the **C** matrices based on any form of differential operators, with any form of boundary conditions.

15. A system according to claims 2 and 7, **characterized in that** it permits convex linear combination of Part A and Part B of the functional, or any equivalent monotonic transform of said combination.

**Patentansprüche**

1. Ein System zum nichtlinearen Data-Mapping und zur Reduzierung der Dimensionalität, bestehend aus:

   - einem selbst-organisierenden neuronalen Netz, das aus einer Vielzahl von Schichten mit Knotenpunkten besteht, die folgendes beinhalten:

     - eine Eingangs-Schicht (1), bestehend aus einer Vielzahl von Eingangsknotenpunkten, die den Variablen der Eingangsdaten entsprechen, sowie einer Ausgangs-Schicht (2), bestehend aus einer Vielzahl von in sich zusammenhängenden Ausgangsknotenpunkten, die ein regelmäßiges Gitter mit einer arbiträren Topologie bilden;

   - Empfangsvorrichtung für die multidimensionale Dateneingabe;
   - Vorrichtung zur Erzeugung eines Ausgangssignals für jeden Knotenpunkt der Ausgangs-Schicht des neuronalen Netzes, das in gewisser Weise den empfangenden, multi-dimensionalen Eingangsdaten entspricht; sowie
   - Trainingsvorrichtung für das neuronale Netz, das einen Mechanismus zur ausdrücklichen Formulierung zweier Hauptleistungsmerkmale des erzeugten Mappings einschließt, d.h. die Wiedergabetreue der Eingangsdaten und die topologische Anordnung, **dadurch gekennzeichnet, dass** sich die Trainingsvorrichtung hauptsächlich auf eine Kostenfunktion stützt, die die Anforderungen eines selbst-organisierenden Mappings formuliert und zwei Teile beinhaltet:

     Teil A: Wiedergabetreue der Eingangsdaten
     Teil B: topologische Anordnung.

2. Ein System gemäß Anspruch 1, **dadurch gekennzeichnet, dass** es folgende Kostenfunktion vorschlägt:

$$\min_{U,V}\left\{\sum_{i=1}^{n}\sum_{j=1}^{c}U_{ji}^{m}\left\|X_{i}-V_{j}\right\|^{2}+\vartheta tr\left(VCV^{T}\right)\right\}$$

$$\textbf{Teil A: (Wiedergabetreue der Eingangsdaten) \quad Teil B}$$
$$\textbf{(topologische Anordnung)}$$

   wobei es sich bei dem ersten Summanden um Teil A und bei dem zweiten Summanden um Teil B handelt und deren Optimierung den FuzzySOM Algorithmus erzeugt.

3. Ein System gemäss Anspruch 2, **dadurch gekennzeichnet, dass** der besagte FuzzySOM Algorithmus aus den folgenden Schritten besteht:

   a. ein zufällig initialisierendes V und ebenfalls ein zufällig initialisierendes U, wobei jedoch die folgenden Einschränkungen erfüllt werden:

$$\begin{cases} 0 \le U_{ji} \le 1 \\ \sum_{j=1}^{c} U_{ji} = 1, \forall i \end{cases}$$

   b. wobei ein Wert für m mit m>1 und ein Wert für $\vartheta$>0 festgelegt ist,
   c. wobei die U-Werte für i=1....n und für j=1....c berechnet werden, unter Verwendung der Gleichung:

$$U_{ji} = \cfrac{1}{\displaystyle\sum_{k=1}^{c} \cfrac{\left\| X_i - V_j \right\|^{2/(m-1)}}{\left\| X_i - V_k \right\|^{2/(m-1)}}}$$

d. für j=1....c werden die V-Werte gemäß folgender Gleichung berechnet:

$$V_j = \cfrac{\displaystyle\sum_{i=1}^{n} U_{ji}^{m} X_i - \vartheta \sum_{\substack{k=1 \\ k \neq j}}^{c} C_{jk} V_k}{\displaystyle\sum_{i=1}^{n} U_{ji}^{m} + \vartheta C_{jj}}$$

e. falls die folgende Bedingung nicht erfüllt ist: $\left\| V_{aktuell} - V_{vorher} \right\|^2 < \varepsilon$, zurück zu Schritt d), falls diese allerdings erfüllt ist, die folgende Bedingung
$\left\| U_{aktuell} - U_{vorher} \right\|^2 < \varepsilon$ jedoch nicht erfüllt ist, wird der gesamte Prozess ab Punkt c) wiederholt,
f. wenn beide Bedingungen erfüllt werden, endet der Algorithmus.

**4.** Ein System gemäß Anspruch 2, **dadurch gekennzeichnet, dass** es die Eigenschaften eines selbst-organisierenden Mappings darstellt und bei dem der Parameter $\vartheta$ das auf das Mapping angewandte Glätteniveau steuert, wobei dieses in eine als Fuzzy C-Means bekannte echte Cluster-Methode verwandelt wird, wenn der Wert des besagten Parameters gleich Null gesetzt wird.

**5.** Ein System gemäß Anspruch 2, **dadurch gekennzeichnet, dass** es sowohl die Visualisierung in einem niedrigeren Dimensionalitätsraum als auch ein Datenclustering erlaubt, wobei alle Eingangsdaten eine Fuzzy-Zugehörigkeit besitzen, die mit jedem der Knotenpunkte der Ausgangs-Schicht verknüpft ist und optimal mittels des Algorithmus und nicht im Nachhinein wie bei anderen ähnlichen Methoden geschätzt wird.

**6.** Ein System gemäß Anspruch 2, **dadurch gekennzeichnet, dass** es die Verwendung jeglicher Abstandsmaße zur Messung der Nicht-Ähnlichkeit in Teil A der Funktion erlaubt.

**7.** Ein System gemäß Anspruch 1, **dadurch gekennzeichnet, dass** es die Formulierung dieser anderen Kostenfunktion erlaubt:

$$\max l_{\vartheta} = \sum_{i=1}^{n} \ln \left( \frac{1}{c} \sum_{j=1}^{c} K(X_i - V_j; \alpha) \right) - \frac{\vartheta}{2\alpha} tr\left( VCV^{T} \right)$$

**Teil A: (Wiedergabetreue der Eingangsdaten)     Teil B (topologische Anordnung)**

wobei die Wiedergabetreue der Eingangsdaten auf der Schätzung der Dichtheitswahrscheinlichkeit vom Typ Kernel der Eingangsdaten beruht und deren Optimierung den Algorithmus KernDenSOM ergibt.

**8.** Ein System gemäß Anspruch 7, **dadurch gekennzeichnet, dass** der besagte KernDenSOM Algorithmus aus folgenden Schritten besteht:

a. die Werte werden laut $\vartheta_i > 0$, $\vartheta_0 > 0$, MaxIter>1, Iter=0 gesetzt,
b. U wird zufällig initialisiert, wobei folgende Einschränkung erfüllt wird:

$$\begin{cases} 0 \le U_{ji} \le 1 \\ \sum_{j=1}^{c} U_{ji} = 1, \forall i \end{cases}$$

c. die V-Werte werden initialisiert, indem folgende Gleichung verwendet wird:

$$V_j = \frac{\sum_{i=1}^{n} X_i u_{ji}}{\sum_{i=1}^{n} u_{ji}}$$

d. wobei $\alpha$ wie folgt initialisiert wird:

$$\hat{\alpha} = \frac{1}{np} \left( \sum_{i=1}^{n} \sum_{j=1}^{c} \left\| X_i - V_j \right\|^2 u_{ji} + \vartheta_1 \sum_{j=1}^{c} \sum_{k=1}^{c} C_{jk} V_j^T V_k \right),$$

e. wobei Iter = Iter +1 berechnet wird, so dass:

$$\vartheta = \exp\left( \ln(\vartheta_i) - \left( \ln(\vartheta_i) - \ln(\vartheta_0) \right) * Iter / MaxIter \right)$$

f. für j=1,...c werden die V-Werte gemäß der folgenden Gleichung berechnet:

$$V_j = \frac{\sum_{i=1}^{n} u_{ji} X_i - \vartheta \sum_{\substack{k=1 \\ k \ne j}}^{c} C_{jk} V_k}{\sum_{i=1}^{n} u_{ji} + \vartheta C_{jj}}$$

g. falls $\left\| V_{aktuell} - V_{vorher} \right\|^2 < \varepsilon$ nicht erfüllt ist, werden die vorherigen Schritte wiederholt, falls nicht wird
h. $\alpha$ unter Verwendung der folgenden Gleichung berechnet:

$$\hat{\alpha} = \frac{1}{np} \left( \sum_{i=1}^{n} \sum_{j=1}^{c} \left\| X_i - V_j \right\|^2 u_{ji} + \vartheta \sum_{j=1}^{c} \sum_{k=1}^{c} C_{jk} V_j^T V_k \right)$$

i. die U-Werte werden für i=1....n und j=1....c unter Verwendung der folgenden Gleichung berechnet:

$$u_{ji} = \frac{K(X_i - \overline{V}_j; \alpha)}{\sum_{k=1}^{c} K(X_i - V_k; \alpha)}$$

j. falls die Bedingung $\left\| U_{aktuell} - U_{vorher} \right\|^2 < \varepsilon$ .... nicht erfüllt ist, zurück zu Schritt f), andernfalls muss überprüft werden, ob die Iterations-Zahl niedriger als die maximale Zahl ist, die im ersten Schritt (a) zugeteilt wurde;

k. falls die vorherige Bedingung erfüllt wird, muss die Reihenfolge ab Schritt e) wiederholt werden, andernfalls endet der Algorithmus.

9. Ein System gemäß Anspruch 7, **dadurch gekennzeichnet, dass** es die Eigenschaften eines selbst-organisierenden Mappings darstellt und bei dem der Regelungsparameter $\vartheta$ das auf das Mapping angewandte Glätteniveau steuert, wobei dieses in eine neue Cluster-Methode verwandelt wird, wenn der Wert des besagten Parameters gleich Null gesetzt wird.

10. Ein System gemäß Anspruch 9, **dadurch gekennzeichnet, dass** es eine exakte Schätzung der Kernel-Breite erlaubt, die für die Schätzung der Wahrscheinlichkeitsdichte verwendet wird.

11. Ein System gemäß Anspruch 9, **dadurch gekennzeichnet, dass** es jegliche Kernel Funktion zur Schätzung der Wahrscheinlichkeitsdichte erlaubt.

12. Ein System gemäß Anspruch 9, **dadurch gekennzeichnet, dass** es nicht nur ermöglicht, ein niedrigeres dimensionales selbst-organisierendes Mapping zu erzeugen, sondern dass es auch die direkte Berechnung der Wahrscheinlichkeitsdichte erlaubt.

13. Ein System gemäß Anspruch 7, **dadurch gekennzeichnet, dass** es neben einer Visualisierung in einem niedrigeren Dimensionalitätsraum auch ein Data-Clustering erlaubt.

14. Ein System gemäß den Ansprüchen 2 und 7, **dadurch gekennzeichnet, dass** es im Teil B der Funktion die Verwendung von jeglichem Nicht-Glätte Maß erlaubt, wobei die auf jeglicher Form von Differentialoperatoren basierenden C-Matrizen mit jeglicher Form von Randbedingungen eingeschlossen sind.

15. Ein System gemäß den Ansprüchen 2 und 7, **dadurch gekennzeichnet, dass** es konvexe lineare Kombinationen von Teil A und Teil B der Funktion erlaubt, bzw. alle äquivalenten monotonen Transformationen der besagten Kombination.

## Revendications

1. Un système pour la création de cartes de données non linéaires et la réduction de dimensionnalité, composé de:

   - Un réseau de neurones auto-organisateur composé d'une pluralité de couches de noeuds, qui comporte :

      - Une couche d'entrée (1) composée d'une pluralité de noeuds d'entrée qui correspondent aux variables des données d'entrée, et une couche de sortie (2) composée d'une pluralité de noeuds de sortie interconnectés qui forment un quadrillage régulier à topologie arbitraire,

   - Un moyen de réception pour l'introduction de données multidimensionnelles;
   - Un moyen pour générer un signal de sortie pour chaque noeud de la couche de sortie du réseau de neurones, et qui correspond de quelque manière aux données d'entrée multidimensionnelles reçues, et
   - Un moyen de formation pour le réseau de neurones qui comporte un mécanisme pour exprimer explicitement deux caractéristiques principales des cartes générées, telles que la fidélité aux données d'entrée et le tri topologique, **caractérisé en ce que** le moyen de formation se fonde essentiellement sur une fonction de coûts qui formule les exigences d'une carte auto-organisatrice et qui comporte deux parties :

      Partie A: Fidélité aux données d'entrée
      Partie B: Tri topologique.

2. Un système selon la revendication 1, **caractérisé en ce qu'**il propose la fonction de coûts suivante:

$$\min_{u,v}\left\{\sum_{i=1}^{n}\sum_{j=1}^{c}U_{ji}^{m}\left\|X_i-V_j\right\|^2 + \vartheta tr\left(VCV^t\right)\right\}$$

**Partie A (fidélité aux données d'entrée)   Partie B (tri topologique)**

la partie A étant le premier terme de la somme et la partie B le deuxième, et dont l'optimisation résulte dans l'algorithme FuzzySOM.

**3.** Un système selon la revendication 2, **caractérisé en ce que** ledit algorithme FuzzySOM est composé des étapes suivantes :

   a. initialisation aléatoire de **v** et initialisation aléatoire de U mais en accomplissant les contraintes suivantes :

$$\begin{cases} 0 \le U_{ji} \le 1 \\ \sum_{j=1}^{c} U_{ji} = 1, \forall_i \end{cases}$$

   b. détermination d'une valeur pour **m**, avec m>1, et détermination d'une valeur pour $\vartheta$>0,
   c. calcul des valeurs de **U** pour i=1...n et pour j=1...c, en utilisant l'équation :

$$U_{ji} = \frac{1}{\sum_{k=1}^{c} \frac{\left\|X_i - V_j\right\|^{2/(m-1)}}{\left\|X_i - V_k\right\|^{2/(m-1)}}}$$

   d. pour j=1...c, calcul des valeurs de **V** en utilisant l'équation :

$$V_j = \frac{\sum_{i=1}^{n} U_{ji}^{m} X_i - \vartheta \sum_{\substack{k=1 \\ k=j}}^{c} C_{jk} V_k}{\sum_{i=1}^{n} U_{ji}^{m} + \vartheta C_{jj}}$$

   e. dans le cas où l'équation suivante $\|V_{actual} - V_{anterior}\|^2 < \varepsilon$ ne se remplit pas, il est nécessaire de retourner à l'étape d), si elle se remplit mais la condition suivante $\|U_{actual} - U_{anterior}\|^2 < \varepsilon$ ne se remplit pas, alors il est nécessaire de répéter tout le processus depuis l'étape c),
   f. dans le cas où les deux conditions se remplissent, l'algorithme est arrêté.

**4.** Un système selon la revendication 2, **caractérisé en ce qu'**il traduit les propriétés d'une carte auto-organisatrice et dans lequel le paramètre de régulation $\vartheta$ contrôle le niveau d'homogénéité appliqué à la carte, qui devient un processus pur de groupement connu comme Fuzzy C Means quand la valeur zéro est déterminée pour ledit paramètre

**5.** Un système selon la revendication 2, **caractérisé en ce qu'**il permet la visualisation dans un espace de dimensionnalité inférieure ainsi que le groupement de données, présentant chaque donnée d'entrée une appartenance aléatoire associée à chacun des noeuds de la couche de sortie estimée de façon optimale grâce à l'algorithme et non à posteriori, comme le font d'autres processus qui s'y rattachent.

**6.** Un système selon la revendication 2, **caractérisé en ce qu'**il permet d'utiliser une non-similitude entre des mesures à distance dans la partie A de la fonction.

**7.** Un système selon la revendication 1, **caractérisé en ce qu'**il permet la formulation de cette autre fonction de coûts:

$$\max l_s = \sum_{i=1}^{n} \ln\left(\frac{1}{c}\sum_{j=1}^{c} K\left(X_i - V_j; \alpha\right)\right) - \frac{\vartheta}{2\alpha} tr(VCV^{\tau})$$

**Partie A (fidélité aux données d'entrée)          Partie B (tri topologique)**

dans laquelle la fidélité aux données d'entrée se fonde sur l'estimation de la densité de la probabilité du type noyau des données d'entrée, et son optimalisation résulte dans l'algorithme KerDenSOM.

**8.** Un système selon la revendication 7, **caractérisé en ce que** ledit algorithme KerDenSOM utilisé est composé des étapes suivantes :

a. Détermination des valeurs $\vartheta_1 > 0$, $\vartheta_0 > 0$, MaxIter > 1, Iter = 0,

b. initialisation aléatoire de U, de manière à accomplir les contraintes :

$$\begin{cases} 0 \leq \overline{U}_{ji} \leq 1 \\ \sum_{j=1}^{c} U_{ji} = 1, \forall_i \end{cases}$$

c. initialisation des **V** en utilisant l'équation suivante :

$$V_j = \frac{\sum_{i=1}^{n} X_i u_{ji}}{\sum_{i=1}^{n} u_{ji}}$$

d. initialisation de •:

$$\alpha = \frac{1}{np}\left(\sum_{i=1}^{n}\sum_{j=1}^{c}\left\|X_i - V_j\right\|^2 u_{ji} + \vartheta_i \sum_{j=1}^{c}\sum_{k=1}^{c} C_{jk} V_j^{\tau} V_k\right)$$

e. calcul de Iter = Iter + 1, de façon que:

$$\vartheta = \exp\left(\ln(\vartheta_i) - \left(\ln(\vartheta_i) - \ln(\vartheta_0)\right) * Iter / MaxIter\right)$$

f. pour j=1...c, calcul des **V** en utilisant l'équation :

$$V_j = \frac{\sum_{i=1}^{n} u_{ji} X_i - \vartheta \sum_{\substack{k=1 \\ k \neq j}}^{c} C_{jk} V_k}{\sum_{i=1}^{n} u_{ji} + \vartheta C_{jj}}$$

g. si $\|V_{actual} - V_{anterior}\|^2 < \varepsilon$, ne se remplit pas il est nécessaire de répéter l'étape précédente, mais si elle se remplit,

h. calcul de • en utilisant l'équation suivante :

$$\alpha = \frac{1}{np} \left( \sum_{i=1}^{n} \sum_{j=1}^{c} \|X_i - V_j\|^2 u_{ji} + \vartheta_i \sum_{j=1}^{c} \sum_{k=1}^{c} C_{jk} V_j^{\tau} V_k \right)$$

i. calcul des **U** pour i=1...n y j=1...c, en utilisant l'équation :

$$u_{ji} = \frac{K(X_i - V_j; \alpha)}{\sum_{k=1}^{c} K(X_i - V_k; \alpha)}$$

j. si la condition $\|U_{actual} - U_{anterior}\|^2 < \varepsilon$, ne se remplit pas il est nécessaire de retourner à l'étape f, mais si elle se remplit il faut vérifier si le nombre de l'itération est inférieur au nombre maximum attribué lors de la première étape (a) ;

k. si la condition antérieure se remplit il est nécessaire de répéter la séquence depuis l'étape e, mais si elle ne se remplit pas l'algorithme sera arrêté.

9. Un système selon la revendication 7, **caractérisé en ce qu'**il traduit les propriétés d'une carte auto-organisative et dans lequel le paramètre de régularisation $\vartheta$ contrôle le niveau d'homogénéité appliqué à la carte, qui devient un nouveau processus de groupement quand la valeur pour ledit paramètre est déterminée à zéro.

10. Un système selon la revendication 9, **caractérisé en ce qu'**il permet l'utilisation de l'estimation exacte de la largeur du noyau pour l'estimation de la densité de probabilité.

11. Un système selon la revendication 9, **caractérisé en ce qu'**il permet l'utilisation de toute fonction de noyau pour l'estimation de la densité de probabilité.

12. Un système selon la revendication 9, **caractérisé en ce qu'**il permet non seulement d'obtenir une carte auto-organisative, mais aussi le calcul direct de la densité de probabilité.

13. Un système selon la revendication 7, **caractérisé en ce qu'**il permet la visualisation dans un espace de dimensionnement inférieur, ainsi que le groupement de données.

14. Un système selon les revendications 2 et 7, **caractérisé en ce qu'**il permet l'utilisation dans la partie B de la fonction, de tout moyen non homogène avec l'inclusion des matrices C fondées sur toute forme d'opérateurs différentiels, avec toute forme de conditions de limites.

15. Un système selon l'une quelconque des revendications 2 et 7, **caractérisé en ce qu'**il permet la combinaison linéaire convexe de la Partie A et de la Partie B de la fonction, ou toute transformation monotone équivalente de ladite combinaison.

FIG. 1

FIG. 2

FIG. 3

FIG. 4

FIG. 5

FIG. 6

FIG. 7

EP 1 353 295 B1

12

10

8

6

4

2

0

0   2   4   6   8   10   12   14   16

|  |  |  |  |  |  |  |  |  |  |  |  |  |
2   2 2 2 2 2 2   2 3 3 3 3 3
        2 2 2 3 3 3   3 3 3 3
        2 2 2 2 2 3 3 3 3 3 3
            2   2 3       3 3 3
            2 2   3 3 3 3 3 3
1 1         2 2   3 3   3 3 3
1 1 1           2 3 3 3 3 3 3
1 1 1           2 3 3   3 3 3
1 1 1 1           2 2 2 2
1 1 1 1       2 2 2 2 2

FIG. 8

22

## FIG. 9

FIG. 10

FIG. 11

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5734796 A
- WO 9957686 A
- US 5303330 A
- US 5729662 A
- US 5384895 A
- WO 9931624 A
- US 5933818 A
- US 5479576 A
- US 5276772 A

### Non-patent literature cited in the description

- Self-organized formation of topologically correct feature maps. *Biol. Cybernet.,* 1982, vol. 43, 59-69
- **H. RITTER ; K. SCHULTEN.** Kohonen's self-organizing maps: exploring their computational capabilities. *Proc. IEEE Int. Joint Conf. On Neural Networks,* 1988, 109-116
- **V.V. TOLAT.** An analysis of Kohonen's self-organizing maps using a system of energy functionals. *Biol. Cybernet.,* 1990, vol. 64, 155-164
- Self-organizing maps: optimization approaches. **T. KOHONEN.** Artificial Neural Networks. 1991, vol. 2, 981-990
- **E. ERWIN ; K. OBERMAYER ; K. SCHULTEN.** Self-organizing maps: ordering, convergence properties and energy functionals. *Biol. Cybernet.,* 1992, vol. 67, 47-55
- **GRAEPEL, M. ; BURGER, K.** Obermayer, Self-organizing maps: Generalizations and new optimization techniques. *Neurocomputing,* 1998, vol. 21, 173-190
- **S.P. LUTTRELL.** A Bayesian analysis of self-organizing maps. *Neural Computing,* 1994, vol. 6, 767-794
- **C.M. BISHOP ; M. SVENSÉN ; C.K.I. WILLIAMS.** Developments of the generative topographic mapping. *Neurocomputing,* 1998, vol. 21, 203-224
- **J. LAMPINEN ; E. OJA.** Clustering properties of hierarchical self-organizing maps. *J. Math. Imaging and Vision,* 1992, vol. 2, 261-272
- **Y. CHENG.** Convergence and ordering of Kohonen's batch map. *Neural Computing,* 1997, vol. 9, 1667-1676
- **E. CHEN-KUO TSAO ; J.C. BEZDEK ; N.R. PAL.** Fuzzy Kohonen clustering networks. *Pattern Recognition,* 1994, vol. 27 ((5)), 757-764
- **T. KOHONEN.** Self-organizing Maps. Springer Verlag, 1995
- **R.A. FISHER.** The use of multiple measurements in taxonomic problems. *Ann. Eugen.,* 1936, vol. 7, 179-188
- **PASCUAL, A. ; BÁRCENA, M. ; MERELO, J.J. ; CARAZO, J.M.** Mapping and Fuzzy Classification of Macromolecular Images using Self-Organizing Neural Networks. *Ultramicroscopy,* July 2000, vol. 84 (1-2), 85-99
- **M. BARCENA ; C. SAN MARTIN ; F. WEISE ; S. AYORA ; J.C. ALONSO ; J.M. CARAZO.** Polymorphic quaternary organization of the Bacillus subtilis bacteriophage SPP1 replicative helicase (G40P). *J. Mol. Biol.,* 1988, vol. 283 ((4)), 809-819